# EUROPÄISCHE PATENTSCHRIFT

(11) **EP 0 849 507 B1**
(45) Veröffentlichungstag und Bekanntmachung des Hinweises auf die Patenterteilung: **16.04.2003**
(21) Anmeldenummer: 97122009.0
(22) Anmeldetag: 13.12.1997
(51) Int. Cl.: F16H 61/24, F16H 63/38

(54) **Getriebeschaltanordnung**
Gearshift linkage for transmission of shift forces
Tringlerie de changement de vitesses pour la transmission des efforts de selection

(30) Priorität: 21.12.1996 DE 19653852; 18.03.1997 DE 19711237
(43) Veröffentlichungstag der Anmeldung: 24.06.1998
(73) Patentinhaber: DEERE & COMPANY, Moline, Illinois 61265-8098 (US)
(72) Erfinder: Teich, Michael, 68199 Mannheim (DE)
(74) Vertreter: Magin, Ludwig Bernhard

(56) Entgegenhaltungen:
- EP-A- 0 558 995
- EP-A- 0 737 826
- DE-A- 2 027 713
- US-A- 4 651 583
- US-A- 5 353 660
- US-A- 5 537 892

## Beschreibung

Die Erfindung betrifft eine Schalteinrichtung zur Übertragung von Schaltkräften für ein zwischen einer Neutralstellung und wenigstens einer Nichtneutralstellung umschaltbares Getriebe, insbesondere für ein Fahrzeugschaltgetriebe.

Bei mechanischen Schaltgetrieben, die durch einen Schalthebel zwischen einer Neutralstellung und einer Gangschaltstellung oder zwischen unterschiedlichen Übertragungsverhältnissen umschaltbar sind, wird beim Umschalten nicht immer eine korrekte Schaltstellung des Getriebes erreicht, sondern ungewollt eine Zwischenstellung eingestellt, der weder die Neutralstellung noch ein eindeutiger Gang des Getriebes zugeordnet ist. Es ist wünschenswert eine Vorrichtung bereitzustellen, die eine automatische Auffindung exakter Stellungen ermöglicht. Diese exakten Stellungen sollen sich auch dann automatisch einstellen, wenn an dem Getriebeschalthebel keine Rastpositionen vorgesehen sind.

Die Einstellung von Zwischenstellungen kann daher rühren, daß die erforderliche Umschaltkraft nicht voll erreicht wurde. Ihre Ursache kann auch in zu großen Toleranzen der zwischen Schalthebel und Getriebe angeordneten Übertragungselementen oder in Verschleißerscheinungen liegen. Hohe Anforderungen an die Toleranzen und die Beständigkeit erhöhen jedoch den technischen Aufwand und die Kosten für die Übertragungselemente. Werden zwischen dem Schalthebel und dem Getriebe Zug-Druck-Bowdenzüge eingesetzt, kommen als erschwerende Faktoren ein lastabhängiges Spiel, Reibung, Korrosion, Fehleinstellungen und enge Verlegeradien hinzu.

Die EP-A-0 737 826 beschreibt eine Gangschalteinrichtung, bei der ein Gangschalthebel über ein flexibles Kabel mit einem Getriebe in Verbindung steht. Der Gangschalthebel ist um zwei zueinander senkrechte Achsen verschwenkbar. Um den Gangschalthebel hinsichtlich einer Schwenkrichtung zuverlässig in einer gewünschten mittleren Neutralposition oder einer ausgelenkten Gangeingriffsposition zu halten, wird diese Schwenkrichtung durch eine Schraubenfeder beeinflußt. Der Kern der Schraubenfeder stützt sich an einem Bolzen ab. Die nach außen abstehenden Schenkel der Schraubenfeder greifen in ein Langloch eines verschwenkbaren am Gangschalthebel befestigten Hebels ein und drängen diesen in eine mittlere Position, die der Neutralposition entspricht. Das Langloch enthält Rastpositionen, die dem Festhalten des Gangschalthebels in einer Gangeingriffsposition dienen sollen.

Eine Getriebeschaltanordnung gemäß dem Oberbegriff des Anspruchs 1 ist auch aus dem Dokument US-5537892 bekannt.

Die der Erfindung zugrunde liegende Aufgabe wird darin gesehen, eine Schalteinrichtung zur Übertragung von Schaltkräften für ein zwischen einer Neutralstellung und wenigstens einer Nichtneutralstellung umschaltbares Getriebe derart auszubilden, daß die eingangs genannten Probleme überwunden werden. Insbesondere soll ein sicheres Auffinden der Neutralstellung oder einer Nichtneutralstellung sowie ein sicheres Halten in diesen Stellungen möglich sein. Es soll eine Rückstellkraft angelegt werden, die eine Rückstellung der Schalteinrichtung in die Neutralstellung gewährleistet, sofern die Auslenkpostion für eine Nichtneutralstellung noch nicht erreicht wurde. Dabei soll allenfalls ein sehr kleiner Totpunktsbereich durchfahren werden. Die Schalteinrichtung soll keine hohen Anforderungen an Herstellungstoleranzen und Verschleißvorkehrungen stellen und einfach und kostengünstig herstellbar und montierbar sein. Sie soll insbesondere auch für eine Kraftübertragung mit Bowdenzügen geeignet sein.

Die Aufgabe wird erfindungsgemäß durch die Lehre des Patentanspruchs 1 gelost. Weitere vorteilhafte Ausgestaltungen und Weiterbildungen der Erfindung gehen aus den Unteransprüchen hervor.

Erfindungsgemäß enthält die Schalteinrichtung einen ersten Hebel, 'der mit einem der Getriebeumschaltung dienenden Getriebeschalthebel in Verbindung steht und durch diesen um eine erste ortsfeste Achse verschwenkbar ist, und einen zweiten Hebel, der um eine zweite parallel zur ersten Achse verlaufende ortsfeste Achse verschwenkbar gelagert ist. Ein Umschaltelement des Getriebes steht mit dem ersten oder dem zweiten Hebel in Verbindung, um eine Getriebeumschaltung vornehmen zu können.

Ferner ist ein Federelement vorgesehen, welches den zweiten Hebel in eine Getriebeneutralstellung drängt. Der Getriebeschalthebel ist beispielsweise ein von Hand betätigbarer Schaltknüppel, und bei dem Umschaltelement kann es sich z. B. um eine verdrehbare Schaltwelle oder verschiebbare Schaltstange des Getriebes handeln.

Jeder der beiden Hebel weist wenigstens einen Schenkel auf, die durch eine Gelenkstelle miteinander verbunden sind. Die Gelenkstelle läßt einerseits ein Verschieben und andererseits ein Verdrehen der beiden Schenkel relativ zueinander zu, so daß ein Ausknicken der Schenkel aus ihrer Neutralstellung gegen die Kraft des Federelements möglich ist. Es ist ferner wenigstens eine Raststellung vorgesehen, die einer Nichtneutralstellung des Getriebes entspricht, in welcher die ausgeknickten Schenkel trotz der Wirkung des Federelements verharren.

Durch eine geeignete Auslegung und Anordnung der beiden Hebel läßt sich der Drehwinkel vergrößern ohne auch die Toleranzwinkel zu vergrößern, d. h. der Eingangsdrehwinkel des ersten Hebels wird in einen vergrößerten Ausgangsdrehwinkel des zweiten Hebels übersetzt. Die erfindungsgemäße Schalteinrichtung ermöglicht ein sicheres Auffinden der Neutralstellung bzw. einer Nichtneutralstellung und ein zuverlässiges Halten in dieser Stellung. Es wird eine Rückstellkraft erzeugt, die eine Rückstellung der Schalteinrichtung in die Neutralstellung gewährleistet, sofern die Auslenkpostion für eine Nichtneutralstellung noch nicht erreicht wurde. Die Herstellungstoleranzen können großzügig bemessen werden, da sie sich nicht wesentlich auf die Funktionsfähigkeit der Schalteinrichtung auswirken. Auch Verschleißerscheinungen und Fehleinstellungen haben nur einen geringen Einfluß auf die Funktionsweise der Schalteinrichtung, welche sich insbesondere für eine Kraftübertragung mit Bowdenzügen eignet.

Die Auslegung erfolgt vorzugsweise so, daß beim Verstellen des Getriebeschalthebels die Kraft des Federelements ausgehend von der Neutralstellung schnell zunimmt. Dabei ist es zweckmäßig, wenn die Federkraft des Federelements in der Neutralstellung gering oder Null ist. Dies erlaubt es, daß ein entfernt liegender Getriebeschalthebel seine neutrale Gasse auffinden kann und nicht durch das Federelement in eine andere nicht in seiner neutralen Gasse liegende Lage gedrängt wird.

Es ist von Vorteil als Federelement eine Zugfeder, beispielsweise eine schraubenförmige Zugfeder mit abgebogenen Enden oder Ösen an ihren,Enden, zu verwenden. Ein Ende der Zugfeder kann an dem zweiten Schenkel angreifen während das andere Ende an einer Anlenkstelle eingehängt wird, die in einer Fluchtlinie mit der ersten und zweiten Achse liegt.

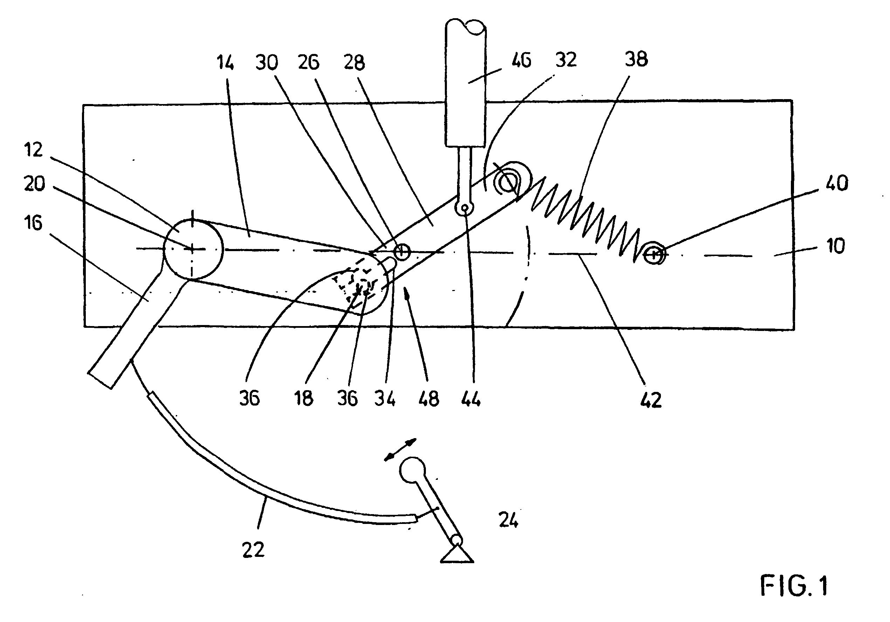

Beispielsweise liegt die an dem zweiten Hebel ausgebildete Anlenkungstelle des Federelements in bezug auf die zweite Achse auf der zur Gelenkstelle gegenüberliegenden Seite des Hebels (Fig. 1). In diesem Fall liegen die erste Achse, die zweite Achse und die Anlenkstelle des Federelements in einer Fluchtlinie hintereinander.

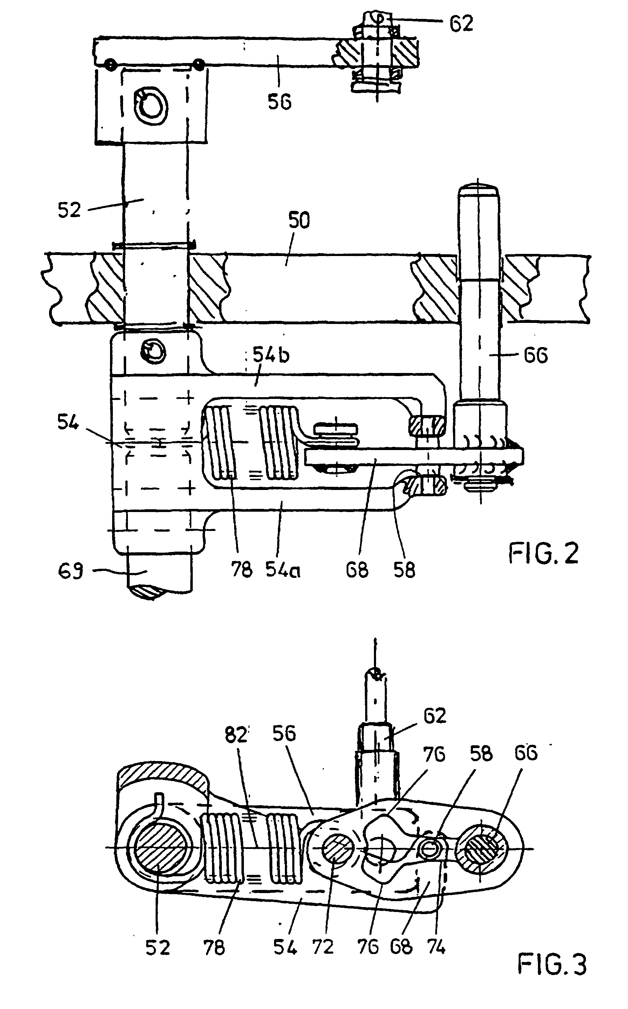

Für eine kompakte Bauweise kann es jedoch vorteilhaft sein, wenn das Federelement einenends auf der Seite der Gelenkstelle an dem zweiten Hebel angreift und mit seinem anderen Ende an einer Welle eingehängt ist, deren Achse mit der ersten Achse zusammenfällt (Fig. 2). Diese Ausbildung hat auch den Vorteil, daß beim Umschalten die Bauteile lediglich eine geringe Relativbewegung zueinander ausführen, da sich die Feder mit der Welle und dem ersten Hebel gleichsinnig verdreht.

Als einfache, zweckmäßige Lösung für eine Gelenkstelle kann im zweiten Hebel eine sich im wesentlichen in Hebellängsrichtung erstreckende Längsausnehmung, z. B. ein Langloch, -vorgesehen sein, in die ein zapfenförmiges Element des ersten Hebels eingreift.

Die Auslegung der Schalteinrichtung kann so erfolgen, daß die beiden Hebel in der Nichtneutralstellung einen Winkel von 90° oder etwas darüber einnehmen, so daß in dieser Stellung das Federelement keine Kraftkomponente aufbringt, die die beiden Hebel in ihre Neutralstellung drängt. Eine Raststellung, die der Nichtneutralstellung entspricht, läßt sich jedoch auf einfache Weise auch dadurch realisieren, daß der Längsschlitz im Bereich seines dem ersten Hebel zugewandten Endes eine seitliche Ausbuchtung aufweist, in die ein mit dem ersten Hebel verbundenes zapfenförmiges Element eingreift und verrastet, sofern sich die Hebel in der Nichtneutralstellung befinden.

Für einen leichtgängigen Mechanismus ist es zweckmäßig, das zapfenförmige Element als auf einer Welle gelagerte ballige Rolle auszubilden.

Vorzugsweise ist der erste Hebel mit einer drehbar gelagerten Welle drehfest verbunden, deren Drehachse die erste Achse ist und die einen weiteren Hebel drehfest trägt, an dem der Getriebeschalthebel direkt oder mittelbar angreift. An diesem weiteren Hebel kann beispielsweise ein Zug-Druck-Bowdenzug angreifen, der der Kraftübertragung eines von Hand einstellbaren Getriebeschalthebels dient. Ferner kann die Drehachse mit dem Umschaltelement des Getriebes verbunden sein.

Eine stabile Bauweise ergibt sich, wenn der erste Hebel im wesentlichen aus zwei zueinander parallelen Schenkeln besteht, zwischen deren freien Enden sich ein zapfenförmiges Element parallel zur ersten Achse erstreckt, wobei das zapfenförmige Element in eine im wesentlichen in Hebellängsrichtung verlaufende Ausnehmung des zweiten Hebels eingreift und die Gelenkstelle bildet. Es ist hierbei für eine kompakte Bauweise vorteilhaft, als Federelement eine schraubenförmige Zugfeder zu verwenden, deren eines Ende an dem zweiten Schenkel angreift und deren anderes Ende an einer den ersten Hebel tragenden drehbaren Welle angreift. Die Zugfeder erstreckt sich dabei im wesentlichen zwischen den beiden Schenkeln des gehäuseartig ausgebildeten ersten Hebels.

Eine weitere vorteilhafte Weiterbildung der Erfindung sieht vor, daß der zweite Hebel mit einer drehbar gelagerten Welle drehfest verbunden ist, deren Drehachse die zweite Achse ist. Diese Drehachse kann direkt oder mittelbar an dem Umschaltelement des Getriebes angreifen. Der zweite Hebel kann als plattenförmiges Bauteil ausgebildet sein, dessen Schenkel einen Längsschlitz aufweist, in den ein zapfenförmiges Element des ersten Hebels eingreift.

Die erfindungsgemäße Schalteinrichtung findet bevorzugt bei Reversiergetrieben für landwirtschatliche oder industrielle Arbeitsfahrzeuge, insbesondere Ackerschlepper, mit wenigstens einer Neutralstellung, einer Vorwärtsstellung und einer Rückwärtsstellung Anwendung.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Ansicht einer ersten erfindungsgemäßen Schalteinrichtung in einer Nichtneutralstellung,
- Fig. 2: die Seitenansicht einer zweiten erfindungsgemäßen Schalteinrichtung,
- Fig. 3: die Aufsicht auf eine Schalteinrichtung gemäß Fig. 2 in ihrer Neutralstellung,
- Fig. 4-6: drei Aufsichten der Schalteinrichtung gemäß Fig. 2 und 3 in unterschiedlichen Stellungen und
- Fig. 7: ein Diagramm, aus dem die Abhängigkeit der Schaltkraft von dem Schalthebelwinkel hervorgeht.

Aus Fig. 1 geht ein erstes Ausführungsbeispiel für eine auf einer Grundplatte 10 montierte Schalteinrichtung hervor. Die Grundplatte 10 trägt eine drehbar gelagerte Welle 12, mit der ein erster Hebel 14 und ein weiterer Hebel 16 drehfest verbunden sind. Der erste Hebel 14 trägt im Bereich seines freien Endes ein zapfenförmiges Element 18, beispielsweise einen Bolzen, der parallel zur Welle 12 ausgerichtet ist. Die Welle 12 definiert eine erste ortsfeste Achse 20. An dem weiteren Hebel 16 greift ein Ende eines Zug-Druck-Bowdenzugs 22 an, dessen anderes Ende mit einem von Hand betätigbaren Getriebeschalthebel 24 verbunden ist. Wird der schwenkbar gelagerte Getriebeschalthebel 24 in Pfeilrichtung verschwenkt, so überträgt der Zug-Druck-Bowdenzug 22 die Schwenkbewegung auf den weiteren Hebel 16, die Welle 12 und den ersten Hebel 14.

Auf der Grundplatte 10 ist ferner über eine zweite ortsfeste Achse 26, die parallel zur ersten Achse 20 ausgerichtet ist, ein zweiter Hebel 28 drehbar gelagert. Der zweite Hebel 28 weist beidseits der zweiten Achse 26 je einen Schenkel 30, 32 auf. In den einen Schenkel 30 ist ein zum Schenkelende hin offener, in Hebellängsrichtung ausgerichteter Längsschlitz 34 eingelassen. In der Nähe des Schenkelendes befinden sich in dem Längsschlitz 34 auf dessen beiden Seiten je eine Ausbuchtung 36. An dem freien Ende des anderen Schenkels 32 ist ein Ende einer Zugfeder 38 eingehängt, deren anderes Ende an einer auf der Grundplatte 10 montierten Anlenkstelle 40 angreift. Die Anlenkstelle 40 liegt mit den beiden Achsen 20 und 26 in einer Fluchtlinie 42. Ferner greift an dem anderen Schenkel 32 über eine Gelenkstelle 44 ein Umschaltelement 46 eines nicht näher dargestellten Getriebes an.
Das zapfenförmige Element 18 des ersten Hebels 14 wird von dem Längsschlitz 34 des zweiten Hebels 28 aufgenommen, so daß sich eine Gelenkstelle 48 ausbildet. Beim Verschwenken der Hebel 14 und 28 verschiebt sich das zapfenförmige Element 18 in Längsrichtung innerhalb des Längsschlitzes 34.

Die Schalteinrichtung der Fig. 1 ist in einer ihrer beiden Nichtneutralstellungen dargestellt, d. h. insbesondere das Umschaltelement 46 befindet sich in einer Stellung, in der das Getriebe eine erste Gangeingriffsstellung für eine Drehmomentübertragung einnimmt. Wird der Getriebeschalthebel 24 hinsichtlich Fig. 1 nach rechts in eine mittlere Lage verschwenkt, so verdreht sich die Welle 12 gegen den Uhrzeigersinn und verschwenkt den ersten Hebel 14. Die Schwenkbewegung wird durch das zapfenförmige Element 18 auf den zweiten Hebel 28 übertragen, der sich mit gleichzeitiger Unterstützung durch die Federkraft der Zugfeder 38 im Uhrzeigersinn verschwenkt. Dabei wird das Umschaltelement 46 hinsichtlich der Fig. 1 nach unten verschoben. Wenn sich der Getriebeschalthebel 24 in seiner mittleren Neutralgasse befindet, liegt das zapfenförmige Element 18 in der Fluchtlinie 42 und das Umschaltelement 46 befindet sich in einer mittleren Lage, die der Neutralstellung des Getriebes entspricht, in der also kein Gangeingriff erfolgt.

Bei einem weiteren Verschwenken des Getriebeschalthebels 24 nach rechts wird über die Gelenkstelle 48 eine Kraft auf den zweiten Hebel 28 übertragen, der diesen weiter im Uhrzeigersinn verschwenkt, so daß das Umschaltelement 46 sich weiter nach unten bewegt und das Getriebe in eine zweite Gangeingriffsstellung bringt.

Eine Gangeingriffspostion wird immer dann erreicht, wenn das zapfenförmige Element 18 in eine seitliche Ausbuchtung 36 des Längsschlitzes 34 eingreift und sich dann auf einer zur zweiten Achse 26 weisenden Flanke der Ausbuchtung 36 abstützt. Hierdurch ergibt sich eine Rastpostion, in der der erste und zweite Hebel 14, 28 trotz der Wirkung der Zugfeder 38 und eventueller Erschütterungen und dergleichen verharren. Kräfte, die auf den zweiten Hebel 28 wirken, vermögen die Verrastung nicht aufzuheben. Lediglich durch ein Verschwenken des Getriebeschalthebels 24 und mit ihm des ersten Hebels 14 kann die Rastpostion überwunden und die Schalteinrichtung aus der Nichtneutralstellung in die Neutralstellung gebracht werden.

wenn die beiden Hebel 14, 18 so ausgebildet sind, daß sie in ihrer Nichtneutralstellung einen Winkel von wenigstens 90° zueinander einnehmen, sind keine Ausbuchtungen 36 mit Flanken in dem Längsschlitz 34 erforderlich, da in dieser Stellung die Zugfeder 38 keine Kraftkomponente aufbringt, um die Hebel 14, 28 in ihre Neutralstellung zu drängen. Diese Ausbildung ist in der Zeichnung jedoch nicht dargestellt.

Die Zugfeder 38 ist so ausgelegt, daß Ihre Zugkraft in der Neutralstellung Null oder nahezu Null ist und mit zunehmender Auslenkung des zweiten Hebels 28 aus der Neutralstellung rasch ansteigt. Die Zugfeder 38 übt auf den zweiten Hebel 28 und die übrigen beweglichen Teile der Schalteinrichtung eine Kraft aus, um diese in ihre Neutralstellung zu bewegen. Wird auf den Getriebeschalthebel 24 durch die Bedienungsperson keine Kraft ausgeübt, so verstellt sich die Schalteinrichtung und mit ihr das Getriebe automatisch in die Neutralstellung. Da in der Neutralstellung die Federkraft sehr gering ist, wird der Getriebeschalthebel 24 am Auffinden seiner Neutralgasse nicht gehindert. Lediglich wenn die Gelenkstelle 48 eine der beiden Rastpostionen einnimmt, ist die Zugfeder 38 nicht in der Lage, eine automatische Verstellung in die Neutralstellung vorzunehmen.

Der Getriebeschalthebel 24 ist vorzugsweise ein Reversierschalthebel, durch den sich das Getriebe von einem Vorwärtsgang über eine Neutralstellung in einen Rückwärtsgang einstellen läßt.

Aus Fig. 2 und 3 geht ein zweites Ausführungsbeispiel der Erfindung hervor, bei dem in einer Grundplatte 50 eine erste Welle 52 drehbar gelagert ist. Auf der hinsichtlich der Fig. 2 unteren Seite der Grundplatte 50 ist an der Welle 52 ein gehäuseartig ausgebildeter erster Hebel 54 drehfest montiert, der zwei parallele Schenkel 54a und 54b enthält. Zwischen den freien Enden der Schenkel 54a und 54b ist eine zur Welle 52 parallele Achse eingespannt, die eine verdrehbare ballig oder tonnenförmig ausgebildete Rolle 58 trägt.

Auf der oberen Seite der Grundplatte 50 ist ein weiterer Hebel 56 drehfest an der Welle 52 festgelegt, an dessen freiem Ende ein Zug-Druck-Bowdenzug 62 angreift, der mit einem nicht näher dargestellten Getriebeschalthebel in Verbindung steht.

Ferner ist in der Grundplatte 50 eine zweite Welle 66 drehbar gelagert, die parallel zur ersten Welle 52 ausgerichtet ist, und an derem hinsichtlich Fig. 2 unteren Ende ein plattenförmiger zweiter Hebel 68 drehfest montiert ist.

Die zweite Welle 66 kann mit einem Umschaltelement für ein Getriebe in Verbindung stehen, was jedoch nicht näher dargestellt wurde. Alternativ hierzu kann auch eine mit dem ersten Hebel 54 drehfest verbundene und mit der Welle 52 fluchtende Welle 69 mit einem Umschaltelement für ein Getriebe in Verbindung stehen.

Der zweite Hebel 68 enthält einen sich im wesentlichen in Hebellängsrichtung erstreckenden Längsschlitz 74, der sich zu der von der Welle 66 weg weisenden Seite zu beiden Seiten aufweitet und zwei seitliche Ausbuchtungen 76 bildet. In dem Längsschlitz 74 wird die Rolle 58 geführt.

An dem freien Ende des zweiten Hebels 68 ist eine Gelenkstelle 72 vorgesehen, an der ein Ende einer Zugfeder 78 angreift, deren anderes Ende in die erste Welle 52 eingehängt ist.

Die Schaltungseinrichtung gemäß der Fig. 2 und 3 unterscheidet sich von der in Fig. 1 dargestellten vorallem durch die gedrungene Bauweise, die sich im wesentlichen dadurch ergibt, daß die Zugfeder 78 bei dem zweiten Ausführungsbeispiel zwischen dem zweiten Hebel 68 und der ersten Welle 52 eingehängt ist. Die Funktionsweisen der beiden Ausführungsbeispiele ist im wesentlichen gleich.

In Fig. 3 ist die Schalteinrichtung in ihrer Neutralstellung dargestellt, in der die Gelenkstelle 72 in einer Fluchtlinie 82 mit der ersten und zweiten Welle 52, 66 liegt. In dieser Lage ist die Zugfeder 78 im wesentlichen entspannt und die Rolle wird von dem geraden Abschnitt des Längsschlitzes 74 aufgenommen.

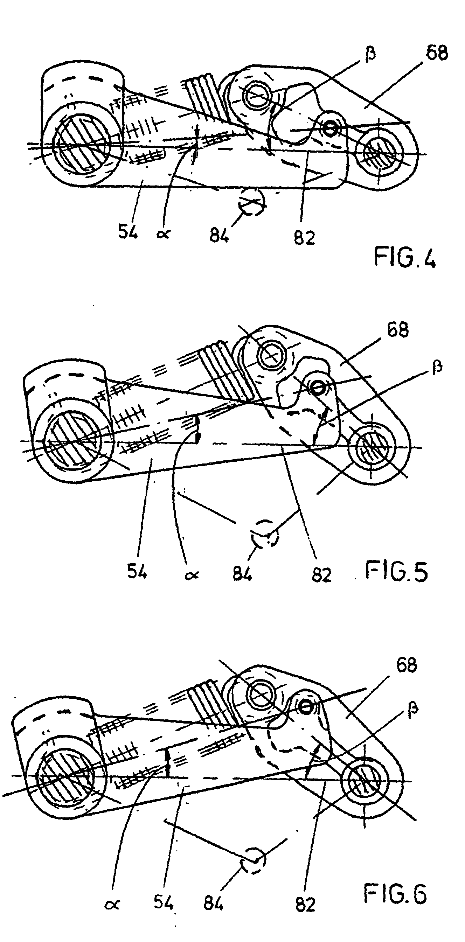

Die Fig. 4 bis 6 stellen die Schalteinrichtung der Fig. 2 und 3 in unterschiedlichen aus der Neutralstellung ausgelenkten Stellungen dar. Bei Fig. 4 beträgt der Auslenkwinkel a des ersten Hebels 54 gegenüber seiner Neutralstellung 5°, während der Auslenkwinkel β des zweiten Hebels 68 gegenüber seiner Neutralstellung 23° beträgt. Es handelt sich hierbei um eine nicht stabile Zwischenstellung der Schalteinrichtung, die durch die Zugkraft der Zugfeder 78 automatisch in ihre Neutralstellung (Fig. 3) zurückgeführt wird, sofern keine Kräfte auf den Getriebeschalthebel und die erste Welle 52 ausgeübt werden. Die Fig. 5 stellt eine weitergehende Auslenkstellung dar, in der der Winkel α = 13° und der Winkel β = 41° beträgt. Dies ist die Übergangsstellung, von der aus die Schalteinrichtung spontan in die verriegelte Nichtneutralstellung übergeht. Die Nichtneutralstellung ist in Fig. 6 dargestellt. Hierbei ist α = 17° und β = 39°. Eine Rückkehr aus der Nichtneutralstellung in die Neutralstellung ist nur möglich, wenn der erste Hebel 54 zurückgestellt wird.

Aus den Fig. 3 bis 6 wird deutlich, daß durch die Anordnung der Hebel 54, 68 und ihrer Achsen 52, 66 sich eine Vergrößerungsfunktion für den Auslenkwinkel ergibt. Eine relativ kleine Änderung des Auslenkwinkels α des ersten Hebels 54 führt zu einem vergleichsweise großen Auslenkwinkel β des zweiten Hebels 68. Hierdurch werden auch die Toleranzwinkel vergrößert, so daß realtiv geringe Anforderungen an die Fertigungstoleranzen der Schaltungseinrichtung gestellt werden müssen.

Der gestrichelte Kreis 84 in den Fig. 4 bis 6 deutet jeweils eine virtuelle Lage der Gelenkstelle 72 an, die eingenommen wird, wenn die Hebel 54 und 68 aus ihrer Neutralstellung nach unten in eine Lage verstellt werden, die spiegelbildlich der dargestellten oberen Lage entspricht. Damit ist die Schalteinrichtung für ein Reversiergetriebe geeignet, das sich aus einem Vorwärtsgang über eine Neutralstellung in einen Rückwärtsgang umschalten läßt.

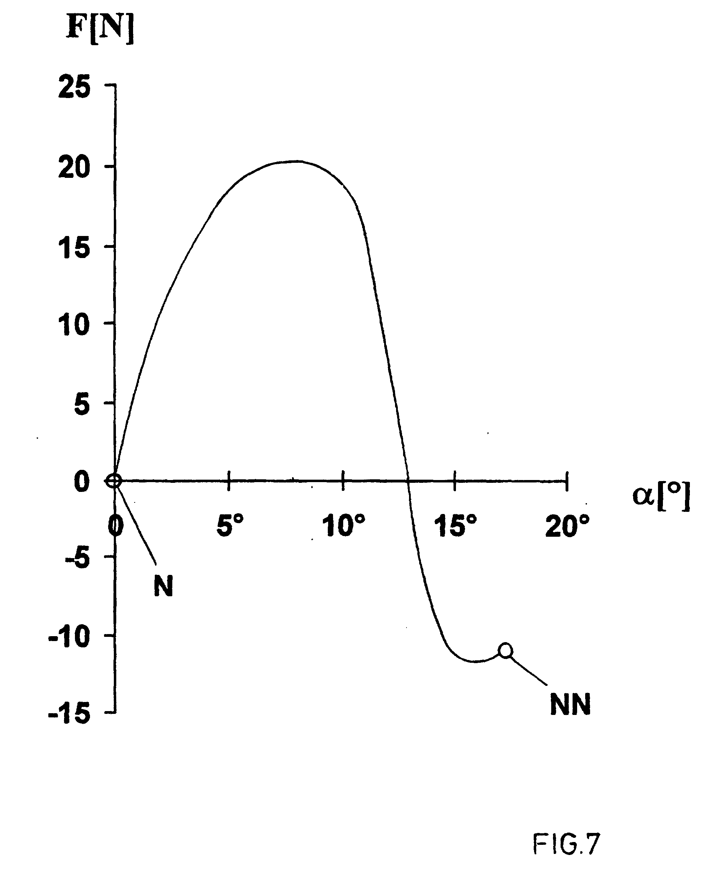

In Fig. 7 ist die am Getriebeschalthebel aufzubringende Kraft F gegenüber dem Ablenkwinkel α aufgetragen. Es wird deutlich, daß in der Neutralstellung N beim Ablenkwinkel α = 0° die Kraft F Null ist. Die Kraft F steigt mit zunehmendem Ablenkwinkel α an, erreicht ihr Maximum und fällt dann sehr steil ab. Durch eine positive Kraft F wird die Schalteinrichtung immer in ihre Neutralstellung gedrängt. Bei α = 13° wird der Umkehrpunkt erreicht, von dem aus die Kraft F negativ wird und die Rolle 58 in eine der Ausbuchtungen 76 eingreift und eine stabile Nichtneutralstellung einnimmt. Besonders hervorzuheben ist der steile Abfall der Kurve zwischen 12° und 13,5°, durch den eine Totpunktslage weitgehend vermieden wird.

## Patentansprüche

1. Schalteinrichtung zur Übertragung von Schaltkräften für ein zwischen einer Neutralstellung und wenigstens einer Nichtneutralstellung umschaltbares Getriebe, insbesondere Fahrzeuggetriebe, mit einem ersten Hebel (14, 54), der mit einem der Getriebeumschaltung dienenden Getriebeschalthebel (24) in Verbindung steht und durch diesen um eine erste ortsfeste Achse (20) verschwenkbar ist, mit einem zweiten Hebel (28, 68), der um eine zweite parallel zur ersten Achse (20) verlaufende ortsfeste Achse (26) verschwenkbar gelagert ist, mit einem Umschaltelement (46) des Getriebes, das mit dem ersten Hebel (54) oder dem zweiten Hebel (28) in Verbindung steht, und mit einem Federelement (38, 78), welches den zweiten Hebel (28, 68) in eine Lage drängt, die der Getriebeneutralstellung entspricht, **dadurch gekennzeichnet daß** je ein Schenkel (14, 54a, 54b; 30, 68) der beiden Hebel (14, 54; 28, 68) über eine Gelenkstelle (48) miteinander verbunden sind, welche einerseits ein Verschieben und andererseits ein Verdrehen der beiden Schenkel (14, 54; 28, 68) relativ zueinander zuläßt, so daß ein Ausknicken der Schenkel (14, 54; 28, 68) aus ihrer Neutralstellung gegen die Kraft des Federelements (38, 78) möglich ist, und wobei wenigstens eine Raststellung, die einer Nichtneutralstellung des Getriebes entspricht, vorgesehen ist, in der die ausgeknickten Schenkel (14, 54; 28, 68) trotz der Wirkung des Federelements (38, 78) verharren.

2. Schalteinrichtung nach Anspruch 1, **dadurch gekennzeichnet, daß** das Federelement (38, 78) derart ausgelegt ist, daß seine Federkraft in Neutralstellung verhältnismäßg gering oder Null ist.

3. Schalteinrichtung nach Anspruch 1 oder 2, **dadurch gekennzeichnet, daß** das Federelement (38, 78) eine Zugfeder ist, deren eines Ende an dem zweiten Schenkel (28, 68) angreift und deren anderes Ende an einer Anlenkstelle (40, 54) angreift, die in einer Fluchtlinie (42, 82) mit der ersten und zweiten Achse (20, 26) liegt.

4. Schalteinrichtung nach Anspruch 3, **dadurch gekennzeichnet, daß** die Anlenkstelle (54), an der das andere Ende der Zugfeder (78) angreift, mit der ersten Achse (54) zusammenfällt.

5. Schalteinrichtung nach einem der Ansprüche 1 bis 4, **dadurch gekennzeichnet, daß** im zweiten Hebel (28, 68) eine sich im wesentlichen in Hebellängsrichtung erstreckende Längsausnehmung (34, 74) vorgesehen ist, in die ein zapfenförmiges Element (18, 58) des ersten Hebels (14, 54) eingreift.

6. Schalteinrichtung nach Anspruch 5, **dadurch gekennzeichnet, daß** die Längsausnehmung (34, 74) im Bereich ihres dem ersten Hebel (14, 54) zugewandten Endes wenigstens eine seitliche Ausbuchtung (36, 76) aufweist, die als Raststelle dient.

7. Schalteinrichtung nach Anspruch 5 oder 6, **dadurch gekennzeichnet, daß** das zapfenförmige Element (18, 58) als auf einer Welle gelagerte ballige Rolle ausgebildet ist.

8. Schalteinrichtung nach einem der Ansprüche 1 bis 7, **dadurch gekennzeichnet, daß** der erste Hebel (14, 54) mit einer drehbar gelagerten Welle (12, 52) drehfest verbunden ist, deren Drehachse die erste Achse (20) ist und die einen weiteren Hebel (16, 56) drehfest trägt, an dem der Getriebeschalthebel (24) direkt oder mittelbar angreift.

9. Schalteinrichtung nach Anspruch 8, **dadurch gekennzeichnet, daß** an dem weiteren Hebel (16, 56) ein mit dem Getriebeschalthebel (24) in Verbindung stehendes Zug-Druck-Kabel (22, 62) angreift.

10. Schalteinrichtung nach einem der Ansprüche 1 bis 9, **dadurch gekennzeichnet, daß** der erste Hebel (14, 54) mit einer drehbar gelagerten Welle (12, 52) drehfest verbunden ist, deren Drehachse die erste Achse (20) ist und die direkt oder mittelbar mit dem Umschaltelement (46) des Getriebes in Verbindung steht.

11. Schalteinrichtung nach einem der Ansprüche 1 bis 10, **dadurch gekennzeichnet, daß** der erste Hebel (54) im wesentlichen aus zwei zueinander parallelen Schenkeln (54a, 54b) besteht, zwischen deren freien Enden sich ein zapfenförmiges Element (58) erstreckt, das in eine im wesentlichen in Hebellängsrichtung verlaufende Ausnehmung (74) des zweiten Hebels (68) eingreift und die Gelenkstelle bildet.

12. Schalteinrichtung nach Anspruch 11, **dadurch gekennzeichnet, daß** das Federelement (78) eine Zugfeder ist, deren eines Ende an dem zweiten Schenkel (68) angreift und deren anderes Ende an einer den ersten Hebel (54) tragenden drehbaren Welle (52) angreift, und daß die Zugfeder (78) sich im wesentlichen zwischen den beiden Schenkeln (54a, 54b) des gehäuseartig ausgebildeten ersten Hebels (54) erstreckt.

13. Schalteinrichtung nach einem der Ansprüche 1 bis 12, **dadurch gekennzeichnet, daß** der zweite Hebel (28, 68) mit einer drehbar gelagerten Welle (26) drehfest verbunden ist, deren Drehachse die zweite Achse (26) ist, die direkt oder mittelbar an dem Umschaltelement (46) des Getriebes angreift.

14. Schalteinrichtung nach Anspruch 13, **dadurch gekennzeichnet, daß** der zweite Hebel (28, 68) als plattenförmiges Bauteil ausgebildet ist und sein Schenkel (30, 68) einen Längsschlitz (34, 74) aufweist, in den ein zapfenförmiges Element (18, 58) des ersten Hebels (14, 54) eingreift.

15. Verwendung einer Schalteinrichtung nach einem der Ansprüche 1 bis 14 für ein Reversiergetriebe mit wenigstens einer Neutralstellung, einer Vorwärtsstellung und einer Rückwärtsstellung.

## Claims

1. A gearshift arrangement for transmitting shift forces for a gearbox, especially a vehicle gearbox, which can be shifted between a neutral position and at least one non-neutral position, with a first lever (14, 54) which is connected to a gearshift lever (24) serving for the gear shifting, through which it can be pivoted about a first positionally fixed axis (20), a second lever (28, 68) which is mounted pivotally about a second positionally fixed axis (26) running parallel to the first axis (20), a shift element (46) of the gearbox which is connected to the first lever (54) or the second lever (28), and a spring element (38, 78) which biases the second lever (28, 68) into a position which corresponds to the gearbox neutral position, **characterized in that** respective arms (14, 54a, 54b; 30, 68) of the two levers (14, 54; 28, 68) are connected together by a joint (48) which allows displacement on the one hand and turning on the other hand of the two arms (14, 54a, 54b; 30, 68) relative to one another, so that it is possible for the arms (14, 54; 28, 68) to buckle out of their neutral position against the force of the spring element (38, 78) and wherein at least one detent position, which corresponds to a non-neutral position of the gearbox, is provided and in which the buckled arms (14, 54; 28, 68) stay in spite of the action of the spring element (38, 78).

2. A gearshift arrangement according to claim 1, **characterized in that** the spring element (38, 78) is so designed that its spring force is comparatively small or zero in the neutral position.

3. A gearshift arrangement according to claim 1 or 2, **characterized in that** the spring element (38, 78) is a tension spring whose one end engages the second lever (28, 68) and whose other end engages a pivot point (40, 54) which lies on a line (42, 82) through the first and second axes (20, 26).

4. A gearshift arrangement according to claim 3, **characterized in that** the pivot point (54) at which the other end of the tension spring (78) engages coincides with the first axis (54).

5. A gearshift arrangement according to any of claims 1 to 4, **characterized in that** a longitudinal recess (34, 74) extending substantially in the direction of the length of the lever is provided in the second lever (28, 68) and an element (18, 58) of pin form of the first lever (14, 54) engages therein.

6. A gearshift arrangement according to claim 5, **characterized in that** the longitudinal recess (34, 74) has at least one side indentation which serves as a detent location in the region of its end facing the first lever (14, 54).

7. A gearshift arrangement according to claim 5 or 6, **characterized in that** the element (18, 58) of pin form is in the form of a crowned roller mounted on a shaft.

8. A gearshift arrangement according to any of claims 1 to 7, **characterized in that** the first lever (14, 54) is connected rotationally fast with a rotatably mounted shaft (12, 52) whose axis of rotation is the first axis (20) and which carries a further rotationally fast lever (16, 56) on which the gearshift lever (24) engages directly or indirectly.

9. A gearshift arrangement according to claim 8, **characterized in that** a push-pull cable (22, 62) connected to the gearshift lever (24) engages the further lever (16, 56).

10. A gearshift arrangement according to any of claims 1 to 9, **characterized in that** the first lever (14, 54) is connected rotationally fast with a rotatably mounted shaft (12, 52) whose axis of rotation is the first axis (20) and which is connected directly or indirectly to the shift element (46) of the gearbox.

11. A gearshift arrangement according to any of claims 1 to 10, **characterized in that** the first lever (54) consists essentially of two parallel arms (54a, 54b), between whose free ends there extends an element (58) of pin form which engages in a recess (74) in the second lever (68) running substantially in the lever longitudinal direction and forming the joint

12. A gearshift arrangement according to claim 11, **characterized in that** the spring element (78) is a tension spring whose one end engages the second lever (68) and whose other end engages a rotatable shaft (52) carrying the first lever (54), and **in that** the tension spring (78) extends essentially between the two arms (54a, 54b) of the first lever (54) formed like a housing.

13. A gearshift arrangement according to any of claims 1 to 12, **characterized in that** the second lever (28, 68) is connected rotationally fast with a rotatably mounted shaft (26) whose axis of rotation is the second axis (26), which engages directly or indirectly on the shift element (46) of the gearbox.

14. A gearshift arrangement according to claim 13, **characterized in that** the second lever (28, 68) is in the form of a plate-like component and its arm (30, 68) has a longitudinal slot (34, 74), in which an element (18, 58) of pin form of the first lever (14, 54) engages.

15. Use of a gearshift arrangement according to any of claims 1 to 14 for a reversing gearbox with at least one neutral position, a forward position and a reverse position.

## Revendications

1. Tringlerie de changement de vitesse pour la transmission des efforts de sélection pour une boîte de vitesse pouvant faire l'objet d'un changement entre une position neutre et au moins une position non neutre, en particulier pour une boîte de vitesse de véhicule automobile, avec un premier levier (14, 54), qui est en liaison avec un levier de changement de vitesse (24) servant au passage des vitesses et qui peut être pivoté par celui-ci autour d'un premier axe fixe (20), avec un deuxième levier (28, 68), qui est placé de manière à pouvoir pivoter autour d'un deuxième axe fixe (26) disposé parallèlement au premier axe (20), avec un élément de changement de vitesse (46) de la boîte de vitesse, qui est en liaison avec le premier levier (54) ou avec le deuxième levier (28) et avec un élément de ressort (38, 78), qui pousse le deuxième levier (28, 68) dans une position qui correspond à la position neutre de la boîte de vitesse, **caractérisée en ce que** respectivement un bras (14, 54a, 54b ; 30, 68) des deux leviers (14, 54 ; 28, 68) sont reliés entre eux à l'aide d'un point d'articulation (48), qui permet d'une part un déplacement et d'autre part une rotation des deux bras (14, 54 ; 28, 68) l'un par rapport à l'autre, une inflexion des bras (14, 54 ; 28, 68) hors de leur position neutre contre la force de l'élément de ressort (38, 78) étant possible et **en ce qu'**au moins une position de repos, qui correspond à une position non neutre de la boîte de vitesse et dans laquelle les bras infléchis (14, 54 ; 28, 68) sont maintenus malgré l'action de l'élément de ressort (38, 78), est prévue.

2. Tringlerie de changement de vitesse selon la revendication 1, **caractérisée en ce que** l'élément de ressort (38, 78) est conçu de telle manière que dans la position neutre, sa force de ressort est relativement faible ou égale à zéro.

3. Tringlerie de changement de vitesse selon la revendication 1 ou 2, **caractérisée en ce que** l'élément de ressort (38, 78) est un ressort de traction, dont l'une des extrémités agit sur le deuxième bras (28, 68) et dont l'autre extrémité agit sur un point d'articulation (40, 54), qui se situe dans un alignement (42, 82) avec le premier et le deuxième axe (20, 26).

4. Tringlerie de changement de vitesse selon la revendication 3, **caractérisée en ce que** le point d'articulation (54), sur lequel agit l'autre extrémité du ressort de traction (78), coïncide avec le premier axe (54).

5. Tringlerie de changement de vitesse selon l'une des revendications 1 à 4, **caractérisée en ce que** dans le deuxième levier (28, 68) est prévu un évidement oblong (34, 74), qui s'étend sensiblement en direction longitudinale du levier et dans lequel agit un élément en forme de tourillon (18, 58) du premier levier (14, 54).

6. Tringlerie de changement de vitesse selon la revendication 5, **caractérisée en ce que** l'évidement oblong (34, 74) présente à son extrémité dirigée vers le premier levier (14, 54) au moins une concavité latérale (36, 76) qui sert de point de repos.

7. Tringlerie de changement de vitesse selon la revendication 5 ou 6, **caractérisée en ce que** l'élément en forme de tourillon (18, 58) est réalisé comme rouleau bombé disposé sur un arbre.

8. Tringlerie de changement de vitesse selon l'une des revendications 1 à 7, **caractérisée en ce que** le premier levier (14, 54) est relié en solidarité de rotation avec un arbre (12, 52) logé de manière à pouvoir tourner, dont l'axe de rotation est le premier axe (20) et qui porte en solidarité de rotation un autre levier (16, 56), sur lequel le levier de changement de vitesse (24) agit directement ou indirectement.

9. Tringlerie de changement de vitesse selon la revendication 8, **caractérisée en ce que** sur l'autre levier (16, 56) agit un câble de traction et de poussée (22, 62), qui est en relation avec le levier de changement de vitesse (24).

10. Tringlerie de changement de vitesse selon l'une des revendications 1 à 9, **caractérisée en ce que** le premier levier (14, 54) est relié en solidarité de rotation avec un arbre (12, 52) logé de manière à pouvoir tourner, dont l'axe de rotation est le premier axe (20) et qui est directement ou indirectement en liaison avec l'élément de changement de vitesse (46) de la boîte de vitesse.

11. Tringlerie de changement de vitesse selon l'une des revendications 1 à 10, **caractérisée en ce que** le premier levier (54) se compose pour l'essentiel de deux bras parallèles entre eux (54a, 54b), entre les extrémités libres desquels s'étend un élément en forme de tourillon (58), qui pénètre dans un évidement (74) du deuxième levier (68) s'étendant sensiblement en direction longitudinale du levier et qui forme le point d'articulation.

12. Tringlerie de changement de vitesse selon la revendication 11, **caractérisée en ce que** l'élément de ressort (78) est un ressort de traction, dont l'une des extrémités agit sur le deuxième bras (68) et dont l'autre extrémité agit sur un arbre pouvant tourner (52) et portant le premier levier (54) et **en ce que** le ressort de traction (78) s'étend sensiblement entre les deux bras (54a, 54b) du premier levier (54) réalisé en forme de cage.

13. Tringlerie de changement de vitesse selon l'une des revendications 1 à 12, **caractérisée en ce que** le deuxième levier (28 68) est relié en solidarité de rotation avec un arbre (26) logé de manière à pouvoir tourner, dont l'axe de rotation est le deuxième axe (26), qui agit directement ou indirectement sur l'élément de changement de vitesse (46) de la boîte de vitesse.

14. Tringlerie de changement de vitesse selon la revendication 13, **caractérisée en ce que** le deuxième levier (28, 68) est réalisé en tant que composant en forme de plaque et **en ce que** son bras (30, 68) comprend une fente longitudinale (34, 74), dans laquelle pénètre un élément en forme de tourillon (18, 58) du premier levier (14, 54).

15. Utilisation d'une tringlerie de changement de vitesse selon l'une des revendications 1 à 14 pour une boîte de vitesse réversible avec au moins une position neutre, une position de marche avant et une position de marche arrière.
